# EUROPEAN PATENT APPLICATION

(11) **EP 2 635 030 A2**
(43) Date of publication of application: **04.09.2013**
(21) Application number: 11836620.2
(22) Date of filing: 26.10.2011
(51) Int. Cl.: H04N 7/34

(54) **ADAPTIVE INTRA-PREDICTION ENCODING AND DECODING METHOD**

(30) Priority: 26.10.2010 KR 20100104489
(71) Applicant: Humax Co., Ltd., Seongnam-si, Gyeonggi-do 463-825 (KR)
(72) Inventor: YIE, Chungku, Incheon 403-762 (KR); KIM, Min Sung, Anyang-si, Gyeonggi-do 431-719 (KR); LEE, Ul Ho, Hwaseong-si, Gyeonggi-do 445-853 (KR)
(74) Representative: Vossius & Partner
(86) International application number: PCT/KR2011/008045
(87) International publication number: WO 2012/057528

(57) **Abstract**

Disclosed is an adaptive intra-prediction encoding and decoding method. The adaptive intra-prediction encoding method comprises the following steps: providing a prediction unit to be encoded; determining the total number of prediction modes for intra-prediction in accordance with the size of the prediction unit; selecting a certain prediction mode on the basis of the displacement of a reference pixel among the determined total number of the prediction modes, and performing intra-prediction using the selected prediction mode; and transforming and quantizing the residual value, which current difference unit, and entropy-encoding the transformed intra-prediction and the current prediction unit, and entropy-encoding the transformed and quantized value. Thus, rate-distortion may be optimized and image quality and encoding speed may be improved.

## Description

### [Technical Field]

The present invention relates to video encoding and decoding and, more particularly, to an adaptive intra-prediction encoding and decoding method that can be applied to intra-prediction encoding of images.

### [Background Art]

Conventional image encoding method uses inter-prediction and intra-prediction techniques designed to remove redundancy between pictures for improving compression efficiency.

In video encoding method by using intra-prediction, pixel values of the current unit (or block) to be encoded are predicted from the values of pixels in the units (or blocks), which have been already encoded and which are located adjacent to the unit (or block) to be currently encoded (for example, the upper, left, upper left right and upper right units (or blocks) with respect to the current block), by using intra-pixel correlation between blocks, and the prediction errors are transferred.

Also, in intra-prediction encoding, an optimal prediction direction (or prediction mode) is selected from various prediction directions (e.g., horizontal, vertical, diagonal, average value, etc.) according to the characteristics of the image to be encoded.

In conventional H.264/AVC standard, when applying intra-prediction encoding on a block in the unit of 4×4 pixels, most appropriate prediction mode is selected from 9 types of prediction modes (i.e., prediction modes 0 through 8) one for each 4×4 pixel blocks, and the selected prediction mode is encoded in the unit of 4×4 pixel block.

Alternatively, when applying intra-prediction encoding on a block in the unit of 16×16 pixels, most appropriate prediction mode is selected from 4 types of prediction modes (i.e., vertical, horizontal, average value, planar prediction) one for each 16×16 pixel block, , and the selected prediction mode is encoded in the unit of 16×16 pixel block.

In conventional intra-prediction encoding, as described above, intra-prediction encoding is performed on symmetric pixel blocks of square shape with M×M pixel size (M=4, 8 or 16) with predetermined number of prediction directions. In other words, conventional methods have applied symmetric partitioning with M×M pixel size for intra-prediction encoding using symmetric block of square shape as the basic unit of intra-prediction encoding.

Since conventional methods of intra-prediction encoding applies one of prediction modes from symmetric square pixel blocks of size 4×4, 8×8 or 16×16 pixel in performing the encoding, there has been limit in encoding efficiency. Therefore, methods for improving encoding efficiency are needed.

Especially, when encoding high resolution images with above HD (High Definition) level resolutions, conventional method reveals limitation in encoding efficiency using conventional intra-prediction units, and so optimal intra-prediction unit is needed for improving encoding efficiency and also needed prediction modes optimized for each intra-prediction unit.

### [Disclosure]

### [Technical Problem]

The first object of the present invention is to provide an adaptive intra-prediction encoding method that can be applied to high resolution images with resolution of an HD (High Definition) or higher.

Also, the second object of the present invention is to provide a method of decoding that can decode images encoded with the intra-prediction encoding method.

### [Technical Solution]

The adaptive intra-prediction encoding method according to one aspect of the present invention for achieving one objective of the invention as described above includes the steps of receiving a prediction unit to be encoded, determining a total number of prediction modes for intra-prediction based on a size of the prediction unit, selecting a prediction mode from the determined total number of the prediction modes and performing the intra-prediction by using the selected prediction mode, and performing transform and quantization on a residue, the residue being a difference between the current prediction unit and a prediction unit predicted by the intra-prediction to perform an entropy-encoding on a result of the transform and the quantization.

Also, the adaptive intra-prediction encoding method according to another aspect of the present invention for achieving one objective of the invention as described above includes the steps of receiving a prediction unit to be encoded, determining a total number of prediction modes for an intra-prediction based on a size of the prediction unit, selecting a prediction mode within the determined total number of the prediction modes with regard to a pixel to be currently encoded and performing the intra-prediction by using a reference pixel located in the selected predetermined prediction mode and a pixel adjacent to the pixel to be currently encoded, and performing transform and quantization on a residue, the residue being a difference between the current prediction unit and a prediction unit predicted by the intra-prediction to perform an entropy-encoding on a result of the transform and the quantization.

Also, the adaptive intra-prediction encoding method according to yet another aspect of the present invention for achieving one objective of the invention as described above includes the steps of receiving a prediction unit to be encoded, performing, when an intra-prediction mode is a planar prediction mode, an intra-prediction by applying the planar mode, performing transform and quantization on a residue, the residue being a difference between the current prediction unit and a prediction unit predicted by the intra-prediction and to perform an entropy-encoding on a result of the transform and the quantization.

Also, the adaptive intra-prediction decoding method according to one aspect of the present invention for achieving another objective of the invention as described above includes the steps of reconstructing a header information and a quantized residue by entropy-decoding received bit stream, performing inverse-quantization and inverse-transformation on the quantized residue to reconstruct a residue, selecting a prediction mode from a plurality of predetermined prediction modes and performing intra-prediction by using the selected prediction mode to generate a prediction unit, and reconstructing an image by adding the prediction unit and the residue. The total number of predetermined prediction modes may be determined according to a size of the prediction unit. The total number of predetermined prediction modes may be 4 when a size of the prediction unit is 64x64 pixels. The prediction mode may not be used when a reference unit does not exist at left or upper side of the current prediction unit. A reference unit may exist at left or upper side of the current prediction unit, if the reference unit at left or upper side of the current prediction unit may not be encoded with intra-prediction, the prediction mode is DC mode. When an intra mode of the current prediction unit is the same as one of an intra mode of a first reference unit located at left side of the current prediction unit, or an intra mode of a second reference unit located at upper side of the current prediction unit, the same intra mode may be used as the prediction mode. If the prediction mode is DC mode and if there does not exist at least one reference pixel of a plurality of first reference pixels located at left side of the current prediction unit and a plurality of second reference pixels located at the upper side of the current prediction unit, the prediction pixel located in the current prediction unit may do not perform filtering by using adjacent reference pixel of the prediction pixel. If the prediction mode is DC mode and if the current prediction unit belongs to chrominance signal, the prediction pixel located in the current prediction unit may do not perform filtering by using adjacent reference pixel of the prediction pixel. If at least one of a plurality of reference pixels in reference unit of the current prediction unit is indicated as non-existence for intra-prediction and if both reference pixel located at upper side of a first reference pixel and reference pixel located at lower side of the first reference pixel exist, the first reference pixel being indicated as the non-existence for the intra-prediction, a prediction pixel value of the first reference pixel may be substituted by an average value of a value of the reference pixel located at the upper side of the first reference pixel and a value of the reference pixel located at the lower side of the first reference pixel.

Also, the adaptive intra-prediction decoding method according to another aspect of the present invention for achieving another objective of the invention as described above includes the steps of reconstructing a header information and a quantized residue by performing entropy-decoding on received bit stream, performing inverse-quantization and inverse-transform on the quantized residue to reconstruct a residue, extracting a prediction mode of a reference pixel from the header information, and performing an intra-prediction by using the reference pixel of the extracted prediction mode and adjacent pixels to generate a prediction unit, reconstructing an image by adding the prediction unit and the residue.

Also, the adaptive intra-prediction decoding method according to yet another aspect of the present invention for achieving another objective of the invention as described above includes the steps of reconstructing a header information and a quantized residue by performing an entropy-decoding on received bit stream, performing an inverse-quantization and inverse-transform on the quantized residue to reconstruct a residue, from the header information, determining whether a planar prediction mode is applied to or not, and, when the planar prediction mode has been applied, performing an intra-prediction by using the planar prediction mode to generate a prediction unit, and reconstructing an image by adding the prediction unit and the residue.

### [Advantageous Effects]

According to the adaptive intra-prediction encoding and decoding method of the present invention as described above, optimal number of prediction directions is provided for each intra-prediction method depending on the size of the prediction unit, thereby optimizing rate-distortion and improving the quality of video and encoding rate.

Also, rate-distortion can be optimized by determining activation of planar prediction mode according to the size of the prediction unit, thereby improving the quality of videos and encoding rate.

### [Brief Description of Drawings]

Fig. 1 is a conceptual diagram illustrating the structure of a recursive coding unit according to one example embodiment of the present invention.

Figs. 2 through 4 are conceptual diagrams illustrating the intra-prediction encoding method by using the prediction unit according to one example embodiment of the present invention.

Fig. 5 is a conceptual diagram illustrating the intra-prediction encoding method by using the prediction unit according to another example embodiment of the present invention.

Fig. 6 is a conceptual diagram illustrating the intra-prediction encoding method by using the prediction unit according to yet another example embodiment of the present invention.

Fig. 7 is a flow diagram illustrating the adaptive intra-prediction encoding method according to one example embodiment of the present invention.

Fig. 8 is a flow diagram illustrating the adaptive intra-prediction decoding method according to one example embodiment of the present invention.

### [Best Modes for Invention]

Example embodiments of the present invention can be modified in various ways and various example embodiments of the present invention can be realized; thus, this document illustrates particular example embodiments in the appended drawings and detailed description of the example embodiment will be provided.

However, that is not meant for limiting the present invention to the particular example embodiments; rather, it should be understood to include every possible modification, equivalent, or substitute of the present invention which belongs to the technical principles and scope of the present invention.

Terms such as first, second, and so on can be used for describing various components but the components should not be limited by the terms. The terms are introduced only for the purpose of distinguishing one component from the others. For example, a first component may be called a second component without departing from the scope of the present invention and vice versa. The term of and/or indicates a combination of a plurality of related items described or any one of a plurality of related items described.

If a component is said to be "linked" or "connected" to a different component, the component may be directly linked or connected to the different component but a third component may exist to connect the two components even though the two components may be connected directly. On the other hand, if a component is said to be "linked directly" or "connected directly" to another component, it should be interpreted that there is no further component between the two components.

Terms used in this document have been introduced only to describe particular example embodiment, not intended to limit the scope of the present invention. Singular expression should be interpreted to include plural expressions unless otherwise stated explicitly. Terms such as "include" or "have" are meant to signify existence of embodied characteristics, numbers, steps, behavior, components, modules, and combinations thereof, which should be understood that possibility of existence or addition of one or more characteristics, numbers, steps, behavior, components, modules, and combinations thereof are not precluded beforehand.

Unless otherwise defined, all the terms used in this document, whether they are technical or scientific, possess the same meaning as understood by those skilled in the art to which the present invention belongs. The terms such as those defined in a dictionary for general use should be interpreted to carry the same contextual meaning in the related technology and they should not be interpreted to possess an ideal or excessively formal meaning.

In what follows, with reference to appended drawings, preferred embodiments of the present invention will be described in more detail. For the purpose of overall understanding of the present invention, the same components of the drawings use the same reference symbols and repeated descriptions for the same components will be omitted.

According to an example embodiment of the present invention, encoding and decoding including inter/intra prediction, transform, quantization, and entropy encoding may be performed using an extended macroblock size of 32x32 pixels or more to be applicable to high-resolution images having a resolution of HD (High Definition) or higher, and encoding and decoding may be conducted using a recursive coding unit (CU) structure that will be described below.

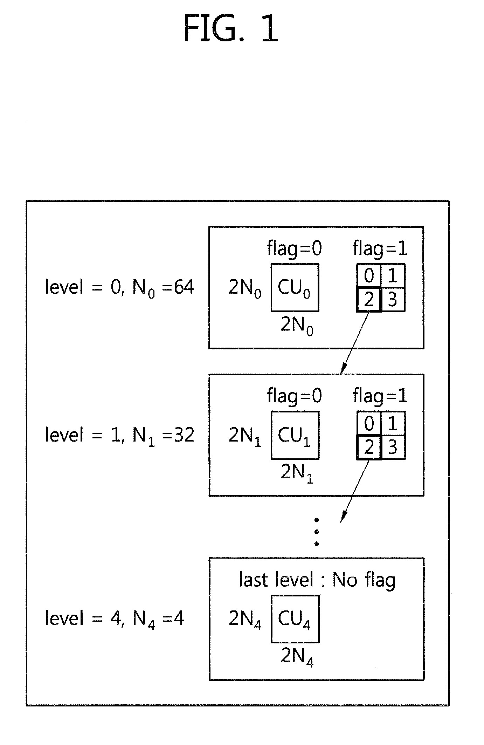

Fig. 1 is a conceptual view illustrating a recursive coding unit structure according to an example embodiment of the present invention.

Referring to Fig. 1, each coding unit CU has a square shape and may have a variable size of 2Nx2N (unit: pixels). Inter prediction, intra prediction, transform, quantization, and entropy encoding may be performed on a per-coding unit basis.

The coding unit CU may include a maximum coding unit LCU and a minimum coding unit SCU. The size of the maximum or minimum coding unit LCU or SCU may be represented by powers of 2 which are 8 or more.

According to an example embodiment, the coding unit CU may have a recursive tree structure. Fig. 1 illustrates an example where a side of the maximum coding unit LCU (or CU0) has a size of 2N0 which is 128 (N0=64) while the maximum level or level depth is 5. The recursive structure may be represented by a series of flags. For example, in the case that a coding unit CUk whose level or level depth is k has a flag value of 0, coding on the coding unit CUk is performed on the current level or level depth.

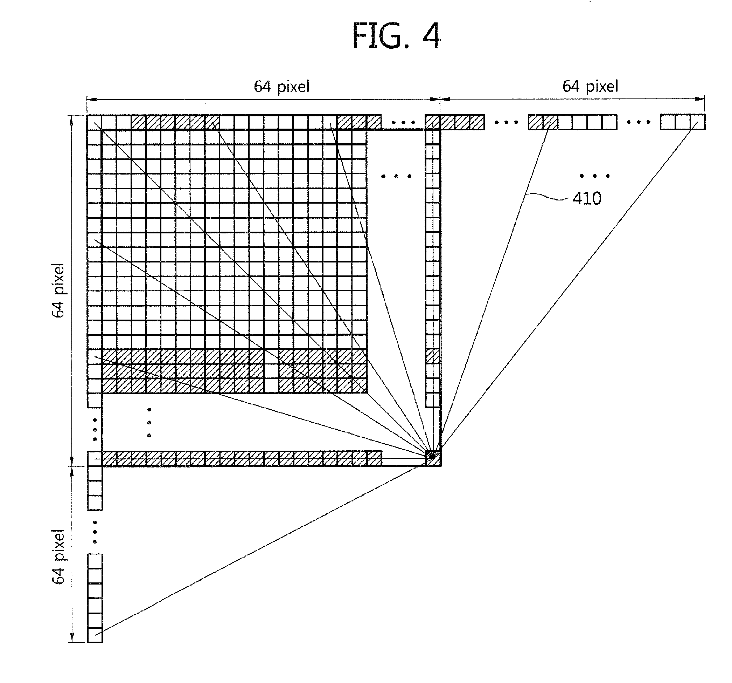

When the flag value is 1, the coding unit CUk is split into four independent coding units CUk+1 having a level or level depth of k+1 and a size of Nk+1xNk+1. In this case, the coding unit CUk+1 may be recursively processed until its level or level depth reaches the permissible maximum level or level depth. When the level or level depth of the coding unit CUk+1 is the same as the permissible maximum level or level depth (which is, e.g., 4 as shown in Fig. 4), any further splitting is not permissible.

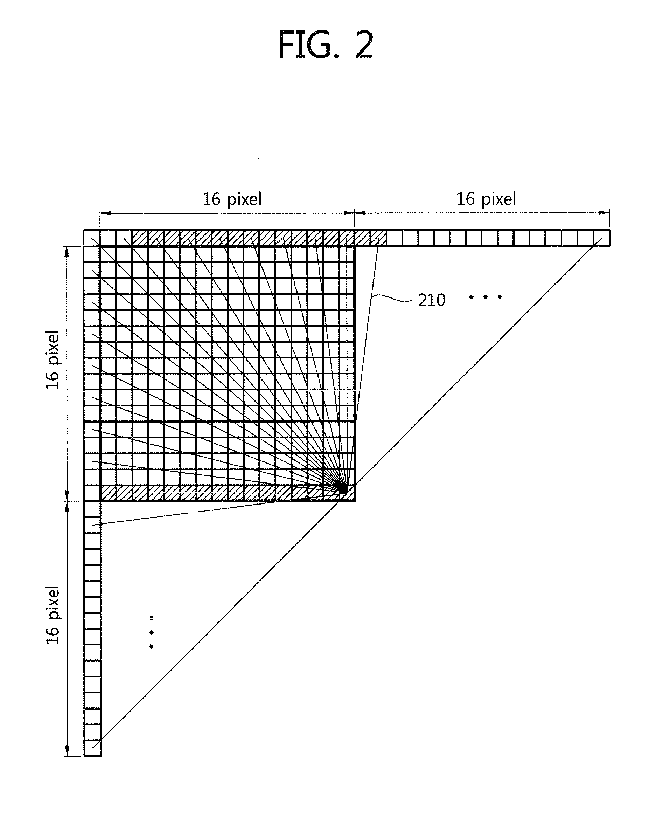

The size of the maximum coding unit LCU and the size of the minimum coding unit SCU may be included in a sequence parameter set (SPS). The sequence parameter set SPS may include the permissible maximum level or level depth of the maximum coding unit LCU. For example, in the example illustrated in Fig. 2, the permissible maximum level or level depth is 5, and when the side of the maximum coding unit LCU has a size of 128 pixels, five coding unit sizes, such as 128x128 (LCU), 64x64, 32x32, 16x16, and 8x8 (SCU), may be possible. That is, given the size of the maximum coding unit LCU and the permissible maximum level or level depth, the permissible size of the coding unit may be determined.

If the hierarchical splitting process is complete, inter prediction or intra prediction may be performed on the leaf node of the coding unit hierarchical unit without being further split. This leaf coding unit is used as the prediction unit PU which is a basic unit of the inter prediction or intra prediction.

For inter prediction or intra prediction, partitioning is fulfilled on the leaf coding unit. That is, partitioning is performed on the prediction unit PU. Here, the prediction unit PU is a basic unit for inter prediction or intra prediction and may be an existing macro-block unit or sub-macro-block unit, or an extended macro-block unit having a size of 32x32 pixels or more or a coding unit.

The intra-prediction method according to the example embodiments of the present invention will be described below in more detail.

Figs. 2 through 4 are conceptual diagrams illustrating the intra-prediction encoding method by using the prediction unit according to one example embodiment of the present invention, and show the concept of intra-prediction method by which the prediction direction is determined according to the angle corresponding to the pixel displacement.

Fig. 2 illustrates an example of a prediction direction in intra-prediction for a prediction unit of 16×16 pixel size.

Referring to Fig. 2, when the size of the prediction unit (PU) is 16×16 pixels, the total number of prediction modes can be 33 and, in the case of vertical prediction, prediction direction is given based on the displacement of the bottom row of the blocks to be currently encoded and the displacement of the reference row of the units (or blocks) located upper side of the blocks to be currently encoded. Here, the displacement of the reference row is transferred to a decoding device in the unit of 2n (where n is an integer between -8 and 8) pixels, and can be transferred while the displacement of the reference row is included in the header information.

As illustrated in Fig. 2, for example, when pixel displacement is +2 pixels, prediction direction becomes 210. In this case, when the predicted pixel exists between two samples of the reference row, the predicted value of the pixel is obtained through linear interpolation of the reference pixels with 1/8 pixel accuracy.

Alternatively, in the case of horizontal prediction, prediction direction is given depending on the displacement of the rightmost column of the unit (or block) to be currently encoded and the displacement of the reference column of the unit (or block) located left to the unit (or block) to be currently encoded. Here, the displacement of the reference row is transferred to a decoding device in the unit of 2n (where n is an integer between -8 and 8) pixels, and can be transferred while the displacement of the reference row is included in the header information.

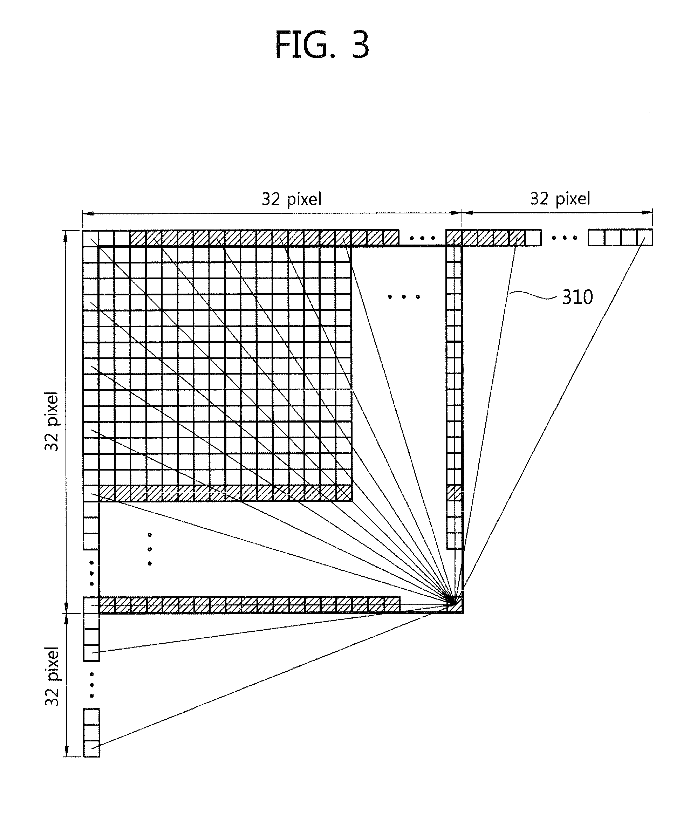

Fig. 3 illustrates an example of the prediction direction at the intra-prediction with prediction unit of 32×32 pixel size.

Referring to Fig. 3, the number of prediction modes can be 33 when the size of the prediction unit (PU) is 32×32 pixels and, in the case of vertical prediction, the prediction direction is given depending on the displacement of the bottom row of the unit (or block) to be currently encoded and the displacement of the reference row of the unit (or block) located at upper side of the unit (or block) to be currently encoded. Here, the displacement of the reference row is transferred to a decoding device in the unit of 4n (where n is an integer between -8 and 8) pixels, and can be transferred while the displacement of the reference row is included in the header information.

As illustrated in Fig. 3, for example, the prediction direction becomes 310 when the pixel displacement is +4 (i.e., n=1) pixels. Here, when the predicted pixel exists between two samples of the reference row, the predicted value of the pixel is obtained through linear interpolation of the reference pixels with 1/8 pixel accuracy.

Alternatively, in the case of horizontal prediction, prediction direction is given depending on the displacement of the rightmost column of the unit (or block) to be currently encoded and the displacement of the reference column of the unit (or block) located left to the unit (or block) to be currently encoded. Here, the displacement of the reference row is transferred to a decoding device in the unit of 4n (where n is an integer between -8 and 8) pixels, and can be transferred while the displacement of the reference row is included in the header information.

Fig. 4 illustrates an example of the prediction direction at the intra-prediction with a prediction unit of 64x64 pixel size.

Referring to Fig. 4, the number of prediction modes can be total of 17 when the size of the prediction unit (PU) is 64×64 pixels, and, in the case of vertical prediction, the prediction direction is given depending on the displacement of the bottom row of the unit (or block) to be currently encoded and the displacement of the reference row of the unit (or block) located at upper side of the unit (or block) to be currently encoded. Here, the displacement of the reference row is transferred to a decoding device in the unit of 16n (where n is an integer between -4 and 4) pixels, and can be transferred while the displacement of the reference row is included in the header information.

As illustrated in Fig. 4, for example, the prediction direction becomes 410 when the pixel displacement is +16 (i.e., n=1) pixels. Here, when the predicted pixel exists between two samples of the reference row, the predicted value of the pixel is obtained through linear interpolation of the reference pixels with 1/4 pixel accuracy.

Alternatively, in the case of horizontal prediction, prediction direction is given depending on the displacement of the rightmost column of the unit (or block) to be currently encoded and the displacement of the reference column of the unit (or block) located left to the unit (or block) to be currently encoded. Here, the displacement of the reference row is transferred to a decoding device in the unit of 16n (where n is an integer between -4 and 4) pixels, and can be transferred while the displacement of the reference row is included in the header information.

Also, in the intra-prediction encoding method according to one example embodiment of the present invention, when the size of the prediction unit (PU) is 128×128 pixels, the number of prediction modes can be total of 17 by the same method as in Fig. 4 and, in the case of vertical prediction, the prediction direction is given depending on the displacement of the bottom row of the unit (or block) to be currently encoded and the displacement of the reference row of the unit (or block) located at upper side of the unit (or block) to be currently encoded. Here, the displacement of the reference row is transferred to a decoding device in the unit of 32n (where n is an integer between -4 and 4) pixels. Here, when the predicted pixel exists between two samples of the reference row, the predicted value of the pixel is obtained through linear interpolation of the reference pixels with 1/4 pixel accuracy.

Alternatively, in the case of horizontal prediction, prediction direction is given depending on the displacement of the rightmost column of the unit (or block) to be currently encoded and the displacement of the reference column of the unit (or block) located left to the unit (or block) to be currently encoded. Here, the displacement of the reference row is transferred to a decoding device in the unit of 32n (where n is an integer between -4 and 4) pixels.

In the intra-prediction encoding method according to one example embodiment of the present invention, as illustrated in Figs. 2 through 4, the prediction direction is determined as one of total 33 modes when the sizes of the prediction units are 16×16 and 32×32 pixels, and the prediction direction is determined as one of total 17 modes when the sizes of the prediction units are 64×64 and 128x128 pixels, thereby enhancing the efficiency of encoding by reducing the prediction direction considering the characteristics of high spatial redundancy which is the characteristics of images with high resolutions (e.g., size of 64×64 pixels or more).

Although it has been described in Figs. 2 through 4 that the number of prediction directions is total of 33 when the size of the prediction unit is 32×32 pixels and the number of prediction directions is total of 17 when the size of the prediction unit is 64x64 or 128x128 pixels, the present invention is not limited to these cases but various numbers of prediction directions can be set up considering the characteristics of spatial redundancy of images as the size of the prediction unit increases.

For example, the number of prediction directions can be set to total of 17 when the size of the prediction unit is 32×32 pixels, and the number of prediction directions can be set to total of 8 or 4 when the size of the prediction unit is 64×64 or 128×128 pixels.

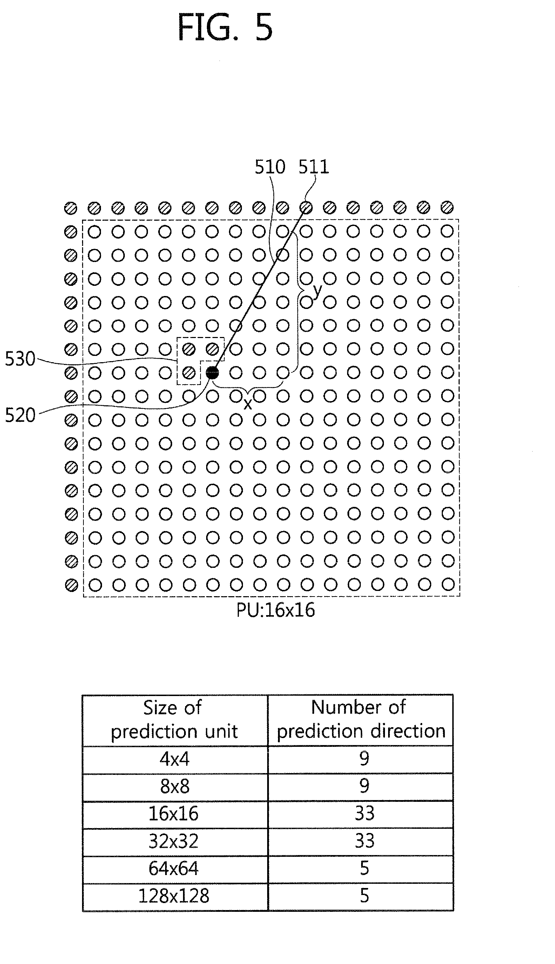

Fig. 5 is a conceptual diagram illustrating the intra-prediction encoding method by using the prediction unit according to another example embodiment of the present invention.

Referring to Fig. 5, in the intra-prediction method according to another example embodiment of the present invention, the encoding device sets a certain prediction direction 510 from a plurality of predetermined prediction directions according to the prediction unit, and predicts the current pixel through the interpolation between the reference pixel 511 present in the prediction direction and the encoded pixels (i.e., left, upper and upper left pixel) 530 which are adjacent to the pixel 520 to be encoded.

Here, the total number of prediction directions based on the prediction unit can be set to total of 9 when the size of the prediction unit (unit: pixel) is 4×4 or 8×8, total of 33 when the size is 16×16 or 32×32, and total of 5 when the size is 64×64 or more. The total number of prediction directions based on the prediction unit, however, are not limited to these cases but the prediction direction can be set with various numbers. Also, weight can be applied in the interpolation between the reference pixel 511 located at the prediction direction 510 and adjacent pixels 530. For example, different weights can be applied to adjacent pixels 530 and the reference pixel 511 according to the distance from the pixel 520 to be encoded to the reference pixel 511 located at the prediction direction 510.

Also, the encoding device transfers horizontal directional distance and vertical directional distance information x, y, which can be used to estimate the slope of the prediction direction 510, to the decoding device in order to define the prediction direction 510 as illustrated in Fig. 5.

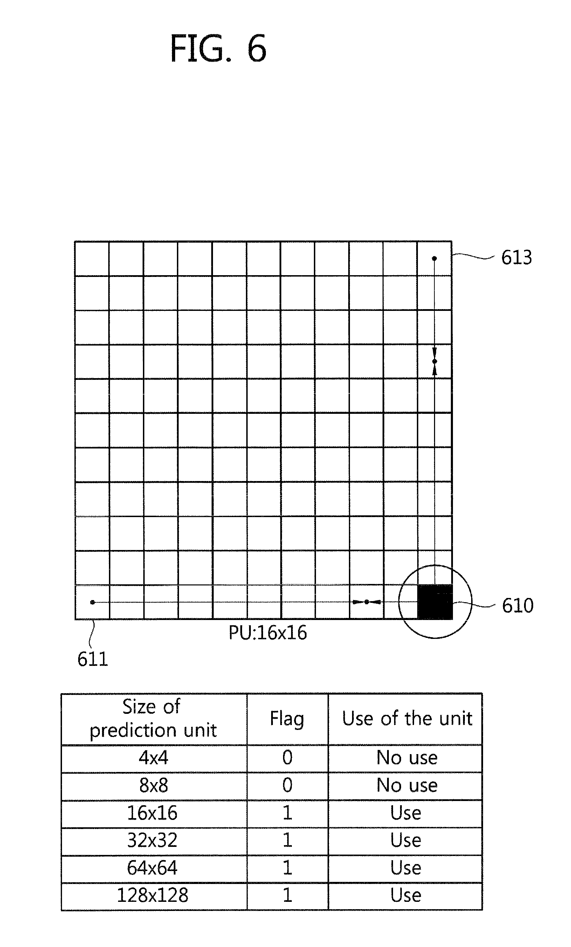

Fig. 6 is a conceptual diagram illustrating the intra-prediction encoding method by using the prediction unit according to yet another example embodiment of the present invention.

If the size of the prediction unit becomes larger when high resolution images with resolutions of HD (High Definition) level or more is encoded, reconstruction to smooth images can be difficult due to the distortion resulting from the prediction when conventional intra-prediction mode is applied to the value of the pixel located at lower right end of the unit.

In order to solve the above problem, separate planar prediction mode (planar mode) can be defined and, in the case of planar prediction mode or when planar mode flag is activated, linear interpolation can be performed in order to estimate the predicted pixel value of the pixel 610 at lower right end of the prediction unit by using the pixel value 611, 613 corresponding to the vertical and horizontal directions in the left and upper unit (or block) which is previously encoded, and/or the internal pixel values corresponding to the vertical and horizontal directions at the prediction unit (or block) as illustrated in Fig. 6.

Also, in the case of planar prediction mode or when planar mode flag is activated, the predicted value of the internal pixel in the prediction unit can be evaluated through bilinear interpolation using the pixel value corresponding to the vertical and horizontal directions in the left and upper unit (or block) which is previously encoded, and/or internal boundary pixel values corresponding to the vertical and horizontal directions at the prediction unit (or block).

In another example embodiment of the present invention, the planar prediction modes described above are determined for use according to the size of the prediction unit.

As illustrated in Fig. 6, for example, setting can be configured so that planar prediction mode is not used when the size of the prediction unit (unit: pixel) is 4×4 or 8×8, and planar prediction mode is used when the size of the prediction unit (unit: pixel) is 16×16 or more. However, the determination on the use of planar prediction mode based on the size of the prediction unit is not limited to the example illustrated in Fig. 6. For example, planar prediction mode can be set to use even when the size of the prediction unit is 8×8 pixels, and the use of planar prediction mode can be determined through an analysis of the characteristics of spatial redundancy of the prediction unit.

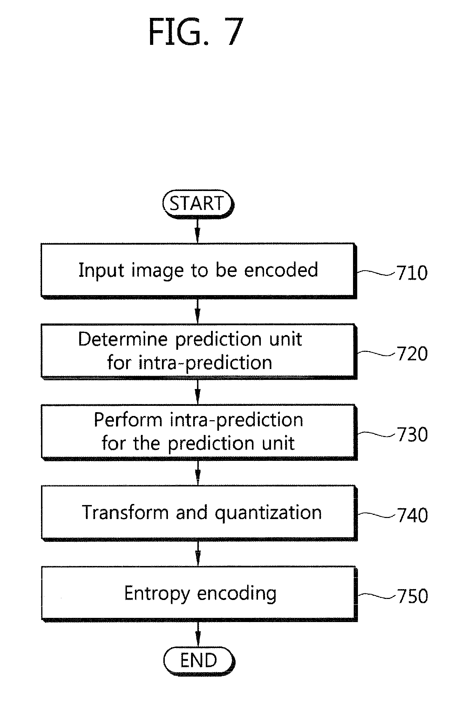

Fig. 7 is a flow diagram illustrating the adaptive intra-prediction encoding method according to one example embodiment of the present invention.

Referring to Fig. 7, first, when an image to be encoded is input to the encoding device (Step 710), the prediction unit for intra-prediction on the input image is determined by using the method illustrated in Fig. 1 (Step 720).

Then, the encoding device performs intra-prediction by applying at least one method from the intra-prediction methods described with reference to the Figs. 2 through 6 (Step 730).

At this step, the encoding device determines the total number of the predetermined prediction directions or the use of planar prediction mode according to the determined intra-prediction method and the size of the prediction unit.

More specifically, when the intra-prediction mode uses the method which determines the prediction direction according to the angle of the pixel displacement as described in Figs. 2 and 4, the total number of prediction directions is determined by the size of the prediction unit, and intra-prediction is performed by selecting a certain prediction direction from the total number of determined prediction directions.

Otherwise, when the encoding prediction method described with reference to Fig. 5 is used, the total number of prediction directions are determined according to the size of the prediction unit, and intra-prediction is performed through the reference pixel and a plurality of adjacent pixels which are located at a certain prediction direction from the prediction directions determined within the total number of interpolations.

Otherwise, when the planar prediction mode described with reference to Fig. 6 is used, whether planar prediction mode is used or not is determined according to the size of the prediction unit. For example, the encoding device performs intra-prediction by using the planar prediction mode when the size of the prediction unit to be encoded is 16x16 pixels or more.

The intra-prediction mode of current prediction unit can have the value of -1 if there exists no reference unit located at the left or upper side of current prediction unit.

The intra-prediction mode of current prediction unit can be a DC mode if the reference unit located at the left or upper side of current prediction unit has not been encoded through intra-prediction. In a DC mode, the average of the pixel values of reference pixels located at the left or upper side of current prediction unit at the time of intra-prediction is calculated and the average value is used as a predicted pixel value.

Then, the encoding device generates a residue by obtaining the difference between the current prediction unit and predicted prediction unit, transforms and quantizes the obtained residue (Step 740), and generates a bit stream by entropy-encoding the quantized DCT coefficients and header information (Step 750).

At this step, the header information, when using the intra-prediction illustrated in Figs. 2 through 4, can include the size of the prediction unit, prediction mode and prediction direction (or pixel displacement), and, the header information, when using the intra-prediction illustrated in Fig. 5, can include the size of the prediction unit, x and y information. Otherwise, when using the planar prediction mode illustrated in Fig. 6, the header information can include the size of the prediction unit and flag information.

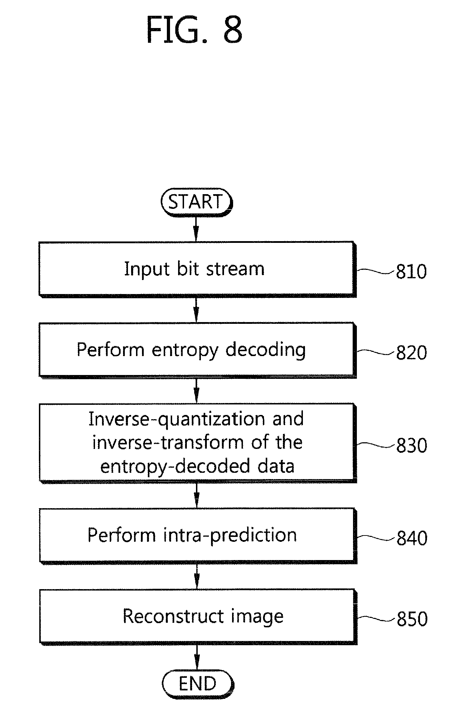

Fig. 8 is a flow diagram illustrating the adaptive intra-prediction decoding method according to one example embodiment of the present invention.

Referring to Fig. 8, the decoding device first receives a bit stream from the encoding device (Step 810).

Then, the decoding device performs entropy-decoding on received bit stream (Step 820). Through entropy-decoding, decoded data includes quantized residues representing the difference between current prediction unit and predicted prediction unit. The header information decoded through entropy-decoding can include the information about the size of the prediction unit, prediction mode, prediction direction (or pixel displacement), x, y information or flag information representing activation of the planar prediction mode depending on the intra-prediction method.

At this step, when encoding and decoding are performed by using a recursive coding unit (CU), the information about the size of the prediction unit (PU) can include the size of the largest coding unit (LCU), the size of the smallest coding unit (SCU), maximally allowable layer level or layer depth, and flag information.

The decoding device performs inverse-quantization and inverse-transform on the entropy-decoded residue (Step 830). The process of inverse-transform can be performed in the unit of the size of the prediction unit (e.g., 32x32 or 64x64 pixels).

Information on the size of the prediction unit (PU) is acquired based on the header information described above, and intra-prediction is performed according to the acquired information about the size of the prediction unit and the intra-prediction method used in the encoding, thereby generating a prediction unit (Step 840).

For example, when decoding is performed on the bit stream encoded as described with reference to Figs. 2 through 4, a certain prediction direction is selected within the total number of prediction directions predetermined based on the displacement of the reference pixel extracted from the header information reconstructed through entropy-decoding, then intra-prediction is performed by using the selected prediction direction, thereby generating a prediction unit.

Otherwise, when decoding is performed on the bit stream encoded as described with reference to Fig. 5, a prediction direction along which the reference pixel is located is extracted from the header information restored through entropy-decoding, then intra-prediction is performed by using the reference pixel located at the extracted prediction direction and adjacent pixels, thereby generating a prediction unit.

Otherwise, when decoding is performed on the bit stream encoded as described with reference to Fig. 6, whether planar prediction mode is applied to or not is determined from the header information reconstructed through entropy-decoding, and, when it is determined that planar prediction mode is applied to, intra-prediction is performed by using planar prediction mode, thereby generating a prediction unit.

Then, the decoding device reconstructs an image by adding the residue, which is inverse-quantized and inverse-transformed, and the prediction unit predicted through intra-prediction (Step 850).

According to another example embodiment of the present invention, prediction mode is not used if there exists no reference unit located at left or upper side of current prediction unit.

Also, the prediction mode can be a DC mode if a reference unit exists at the left or upper side of current prediction unit exists and if the reference unit located at the left or upper side of current prediction unit has not been encoded with intra-prediction.

Also, when an intra mode of the current prediction unit is the same as one of an intra mode of a first reference unit located at left side of the current prediction unit, or an intra mode of a second reference unit located at upper side of the current prediction unit, the same intra mode can be the prediction mode.

Also, if the prediction mode is DC mode and if there does not exist at least one reference pixel of a plurality of first reference pixels located at left side of the current prediction unit and a plurality of second reference pixels located at the upper side of the current prediction unit, the prediction pixel located in the current prediction unit may not perform filtering by using adjacent reference pixel of the prediction pixel.

Also, if the prediction mode is DC mode and if the current prediction unit belongs to chrominance signal, the prediction pixel located in the current prediction unit may not perform filtering by using adjacent reference pixel of the prediction pixel.

Also, if at least one of a plurality of reference pixels in reference unit of the current prediction unit is indicated as non-existence for intra-prediction and if both reference pixel located at upper side of a first reference pixel and reference pixel located at lower side of the first reference pixel exist, the first reference pixel being indicated as the non-existence for the intra-prediction, a prediction pixel value of the first reference pixel can be substituted by an average value of a value of the reference pixel located at the upper side of the first reference pixel and a value of the reference pixel located at the lower side of the first reference pixel.

Although the present invention has been described with reference to examples, it should be appreciated that those skilled in the art will be able to modify and change the invention within the idea and scope of the invention as described in the claims.

## Claims

1. A video encoding method comprising the steps of:
receiving a prediction unit to be encoded;
determining a total number of prediction modes for intra-prediction based on a size of the prediction unit;
selecting a prediction mode from the determined total number of the prediction modes and performing the intra-prediction by using the selected prediction mode; and
performing transform and quantization on a residue, the residue being a difference between the current prediction unit and a prediction unit predicted by the intra-prediction to perform an entropy-encoding on a result of the transform and the quantization.

2. The video encoding method of claim 1, wherein the total number of the prediction modes is predetermined based on the size of the prediction unit.

3. The video encoding method of claim 1, wherein the total number of the prediction modes is 4 when the prediction unit has a size of 64×64 pixels.

4. A video encoding method comprising the steps of:
receiving a prediction unit to be encoded;
determining a total number of prediction modes for an intra-prediction based on a size of the prediction unit;
selecting a prediction mode within the determined total number of the prediction modes with regard to a pixel to be currently encoded and performing the intra-prediction by using a reference pixel located in the selected predetermined prediction mode and a pixel adjacent to the pixel to be currently encoded; and
performing transform and quantization on a residue, the residue being a difference between the current prediction unit and a prediction unit predicted by the intra-prediction to perform an entropy-encoding on a result of the transform and the quantization.

5. A video encoding method comprising the steps of:
receiving a prediction unit to be encoded;
performing, when an intra-prediction mode is a planar prediction mode, an intra-prediction by applying the planar mode; and
performing transform and quantization on a residue, the residue being a difference between the current prediction unit and a prediction unit predicted by the intra-prediction and to perform an entropy-encoding on a result of the transform and the quantization.

6. The video encoding method of claim 5, wherein the performing intra-prediction by applying the planar mode is performed, in order to obtain a predicted value of a first pixel at lower rightmost of the current prediction unit, through a linear interpolation by using a value of a pixel in a reference unit, the pixel in the reference unit vertically and horizontally corresponding to the first pixel at lower rightmost of the current prediction unit, the reference unit being previously encoded before the current prediction unit and the reference unit being located at left and upper side of the current prediction unit.

7. The video encoding method of claim 5, wherein the performing an intra-prediction by applying the planar prediction mode is performed, in order to obtain a predicted value of an internal pixel of the prediction unit, through a bilinear interpolation by using at least one of a value of a pixel in a reference unit and a value of an internal boundary pixel, the pixel in the reference unit vertically and horizontally corresponding to the internal pixel of the prediction unit, the reference unit being previously encoded before the current prediction unit and the reference unit being located at left and upper side of the current prediction unit, the internal boundary pixel vertically and horizontally corresponding to the internal pixel of the prediction unit, the internal boundary pixel being located in the current prediction unit.

8. The video encoding method of claim 5, wherein the planar prediction mode is not applied when the prediction unit has a size of 4×4 or 8×8 pixels, and the planar prediction mode is applied when the prediction unit has a size of 16×16 pixels or more.

9. A video decoding method comprising the steps of:
reconstructing a header information and a quantized residue by entropy-decoding received bit stream;
performing inverse-quantization and inverse-transformation on the quantized residue to reconstruct a residue;
selecting a prediction mode from a plurality of predetermined prediction modes and performing intra-prediction by using the selected prediction mode to generate a prediction unit; and
reconstructing an image by adding the prediction unit and the residue.

10. The video decoding method of claim 9, wherein the total number of predetermined prediction modes is determined according to a size of the prediction unit.

11. The video decoding method of claim 9, wherein the total number of predetermined prediction modes is 4 when a size of the prediction unit is 64×64 pixels.

12. The video decoding method of claim 9, wherein the prediction mode is not used when a reference unit does not exist at left or upper side of the current prediction unit.

13. The video decoding method of claim 12, wherein a reference unit exists at left or upper side of the current prediction unit, if the reference unit at left or upper side of the current prediction unit is not encoded with intra-prediction, the prediction mode is DC mode.

14. The video decoding method of claim 9, wherein, when an intra mode of the current prediction unit is the same as one of an intra mode of a first reference unit located at left side of the current prediction unit, or an intra mode of a second reference unit located at upper side of the current prediction unit, the same intra mode is used as the prediction mode.

15. The video decoding method of claim 9, wherein, if the prediction mode is DC mode and if there does not exist at least one reference pixel of a plurality of first reference pixels located at left side of the current prediction unit and a plurality of second reference pixels located at the upper side of the current prediction unit, the prediction pixel located in the current prediction unit does not perform filtering by using adjacent reference pixel of the prediction pixel.

16. The video decoding method of claim 9, wherein, if the prediction mode is DC mode and if the current prediction unit belongs to chrominance signal, the prediction pixel located in the current prediction unit does not perform filtering by using adjacent reference pixel of the prediction pixel.

17. The video decoding method of claim 9, wherein, if at least one of a plurality of reference pixel in reference unit of the current prediction unit is indicated as non-existence for intra-prediction and if both reference pixel located at upper side of a first reference pixel and reference pixel located at lower side of the first reference pixel exist, the first reference pixel being indicated as the non-existence for the intra-prediction, a prediction pixel value of the first reference pixel is substituted by an average value of a value of the reference pixel located at the upper side of the first reference pixel and a value of the reference pixel located at the lower side of the first reference pixel.

18. A video decoding method comprising the steps of:
reconstructing a header information and a quantized residue by performing entropy-decoding on received bit stream;
performing inverse-quantization and inverse-transform on the quantized residue to reconstruct a residue;
extracting a prediction mode of a reference pixel from the header information, and performing an intra-prediction by using the reference pixel of the extracted prediction mode and adjacent pixels to generate a prediction unit; and
reconstructing an image by adding the prediction unit and the residue.

19. A video decoding method comprising the steps of:
reconstructing a header information and a quantized residue by performing an entropy-decoding on received bit stream;
performing an inverse-quantization and inverse-transform on the quantized residue to reconstruct a residue;
from the header information, determining whether a planar prediction mode is applied to or not, and, when the planar prediction mode has been applied, performing an intra-prediction by using the planar prediction mode to generate a prediction unit; and
reconstructing an image by adding the prediction unit and the residue.

20. The video decoding method of claim 19, wherein the planar prediction mode is not applied when the prediction unit has a size of 4×4 or 8x8 pixels, and the planar prediction mode is applied when the prediction unit has a size of 16×16 pixels or more.

21. The video decoding method of claim 19, wherein a total number of a predetermined prediction mode is determined according to a size of the prediction unit.

22. The video decoding method of claim 19, wherein the prediction mode is not used when a reference unit does not exist at left or upper side of the current prediction unit.

23. The video decoding method of claim 19, wherein a reference unit exists at left or upper side of the current prediction unit, if the reference unit at left or upper side of the current prediction unit is not encoded with intra-prediction, the prediction mode is DC mode.

24. The video decoding method of claim 19, wherein, when an intra mode of the current prediction unit is the same as one of an intra mode of a first reference unit located at left side of the current prediction unit, or an intra mode of a second reference unit located at upper side of the current prediction unit, the same intra mode is used as the prediction mode.

25. The video decoding method of claim 19, wherein, if the prediction mode is DC mode and if there does not exist at least one reference pixel of a plurality of first reference pixels located at left side of the current prediction unit and a plurality of second reference pixels located at the upper side of the current prediction unit, the prediction pixel located in the current prediction unit does not perform filtering by using adjacent reference pixel of the prediction pixel.

26. The video decoding method of claim 19, wherein, if the prediction mode is DC mode and if the current prediction unit belongs to chrominance signal, the prediction pixel located in the current prediction unit does not perform filtering by using adjacent reference pixel of the prediction pixel.

27. The video decoding method of claim 19, wherein, if at least one of a plurality of reference pixels in reference unit of the current prediction unit is indicated as non-existence for intra-prediction and if both reference pixel located at upper side of a first reference pixel and reference pixels located at lower side of the first reference pixel exist, the first reference pixel being indicated as the non-existence for the intra-prediction, a prediction pixel value of the first reference pixel is substituted by an average value of a value of the reference pixel located at the upper side of the first reference pixel and a value of the reference pixel located at the lower side of the first reference pixel.
